# FASCICULE DE BREVET EUROPEEN

(11) **EP 2 145 376 B1**
(45) Date de publication et mention de la délivrance du brevet: **12.08.2015**
(21) Numéro de dépôt: 08805693.2
(22) Date de dépôt: 23.04.2008
(51) Int. Cl.: H02K 15/03

(54) **PROCEDE DE FABRICATION D'UN ROTOR DE MACHINE ELECTRIQUE TOURNANTE, NOTAMMENT UN ALTERNATEUR**
VERFAHREN ZUR HERSTELLUNG EINES ROTORS FÜR EINE ROTIERENDE ELEKTRISCHE MASCHINE, INSBESONDERE EINEN GENERATOR
METHOD OF MANUFACTURING A ROTOR FOR ROTATING ELECTRICAL MACHINE, NOTABLY AN ALTERNATOR

(30) Priorité: 11.05.2007 FR 0755014
(43) Date de publication de la demande: 20.01.2010
(73) Titulaire: Valeo Equipements Electriques Moteur, 94046 Créteil Cedex (FR)
(72) Inventeur: GAS, Olivier, 75017 Paris (FR); PFLEGER, Alexandre, 93160 Noisy Le Grand (FR)
(74) Mandataire: de Lambilly Delorme, Marie Pierre
(86) Numéro de dépôt international: PCT/FR2008/050739
(87) Numéro de publication internationale: WO 2008/145929

(56) Documents cités:
- EP-A- 0 596 798
- WO-A-2004/113716
- FR-A- 2 850 805
- JP-A- 5 056 616
- JP-A- 10 248 221
- US-A- 4 959 577
- US-A- 5 483 116
- US-A- 5 747 913

## Description

L'invention concerne notamment un procédé de fabrication d'un rotor de machine électrique tournante, notamment un alternateur.

Le brevet FR 2 793 085 décrit un alternateur pour véhicule automobile, comprenant un stator et un rotor monté sur un arbre. Le rotor comporte une bobine et deux roues polaires pourvues chacune d'une pluralité de griffes. Les roues définissent entre elles, au niveau des griffes, des espaces interpolaires pouvant recevoir des aimants permanents en terre rare. Le procédé de fabrication du rotor comprend l'étape d'usinage de gorges ou rainures sur les griffes, une fois les roues polaires assemblées, au moyen d'un passage d'outil. Ce procédé comporte un certain nombre d'inconvénients. Par exemple, dans la mesure où la bobine est assemblée entre les roues polaires avant usinage des rainures, il n'est pas utilisé de lubrifiant lors de l'usinage, ce qui entraîne une usure plus rapide de l'outil et/ou une opération d'usinage moins rapide. De plus, du fait de limitations imposées à l'outil d'usinage utilisé, l'espace interpolaire entre les rainures ne peut pas être sélectionné aussi étroit que souhaité. Enfin des copeaux issus de l'usinage peuvent s'introduire au sein du rotor.

L'invention vise notamment à remédier aux inconvénients précités.

L'invention a ainsi pour objet un procédé de fabrication d'un rotor de machine électrique tournante, notamment un alternateur, le rotor comprenant deux roues polaires définissant entre elles au moins un espace interpolaire agencé pour recevoir au moins un aimant, le procédé comportant, avant l'assemblage des deux roues polaires, les étapes suivantes :
- réaliser sur l'une au moins des roues polaires au moins une marque d'indexation angulaire,
- former par usinage, sur la roue polaire, au moins une rainure délimitant partiellement l'espace interpolaire, en maintenant la roue polaire dans une position angulaire dépendante de la marque d'indexation angulaire.

Grâce à l'invention, l'usinage étant réalisé avant l'assemblage des roues polaires, le type d'outil utilisé (qui peut être standard) pour usiner la rainure peut être choisi de manière à pouvoir former une rainure, et donc un espace interpolaire, de taille réduite, permettant ainsi de pouvoir insérer dans les espaces interpolaires des aimants de petite taille.

Il est également possible d'éviter le risque de coupure de fils de la bobine qui existe lorsque l'usinage est réalisé après assemblage, et d'avoir des fenêtres de bobinage plus grandes.

On peut également réduire le risque d'introduction de copeaux dans le rotor.

Il est encore possible de modifier la largeur choisie de la rainure usinée sans changer d'outil d'usinage, en faisant varier le déplacement de l'outil lors de l'usinage.

De plus, comme l'usinage des rainures est réalisé avant assemblage des différents éléments du rotor, notamment d'une bobine, il est possible d'utiliser un lubrifiant lors de l'usinage des rainures.

En outre les opérations d'usinage peuvent être effectuées pour l'essentiel en amont de la chaîne d'assemblage final du rotor, par exemple chez un fournisseur.

Il est possible d'avoir un seul poste d'usinage pour plusieurs lignes d'assemblage, si on le souhaite.

Dans l'invention, les marques d'indexation angulaire, qui servent de références angulaires, permettent de positionner la roue polaire correspondante de manière précise lors des opérations d'usinage. Comme l'assemblage des roues polaires peut être effectué en prenant les marques d'indexation angulaire comme références angulaires, la disposition relative des roues polaires peut être précise, ce qui assure que les espaces interpolaires soient eux-mêmes précis de manière à pouvoir y insérer correctement des aimants.

Dans un exemple de mise en oeuvre de l'invention, le procédé comporte l'étape consistant, avant l'assemblage des deux roues polaires, à usiner une face circonférentielle de l'une au moins des roues polaires pour ajuster le diamètre de la roue, en maintenant la roue polaire dans une position angulaire dépendante de la marque d'indexation angulaire.

Le procédé peut comporter l'étape suivante :
- réaliser un alésage sur la roue polaire de manière à former un passage intérieur pour recevoir un arbre de la machine électrique tournante, en maintenant la roue polaire dans une position angulaire dépendante de la marque d'indexation.

L'invention permet de réaliser le passage intérieur avec un positionnement précis, repéré grâce à la ou les marques d'indexation angulaire.

De préférence, le procédé comporte l'étape suivante :
- assembler les roues polaires en les positionnant angulairement l'une par rapport à l'autre à l'aide de marques d'indexation réalisées sur les roues polaires.

Comme les rainures délimitant les espaces interpolaires sont usinées en positionnant les roues polaires par rapport aux marques d'indexation, le fait d'assembler les roues polaires en prenant comme références ces marques d'indexation, les rainures (qui définissent des surfaces fonctionnelles) sont positionnées précisément les unes par rapport aux autres, ce qui assure que les espaces interpolaires sont de dimensions précises pour pouvoir y insérer correctement les aimants permanents.

Dans un exemple de mise en oeuvre de l'invention, le maintien de la roue polaire dans la position angulaire prédéterminée est réalisé à l'aide d'au moins une tige de maintien coopérant avec l'une au moins des marques d'indexation de la roue polaire.

La tige de maintien peut appartenir par exemple à une machine sur laquelle la roue polaire est usinée ou une machine sur laquelle deux roues polaires sont assemblées.

Les tiges de maintien sont par exemple des tiges rétractables pouvant s'engager sur les marques d'indexation des roues polaires et s'escamoter pour se désengager de ces marques.

Ce ou ces tiges de maintien peuvent être agencées pour se déplacer, selon le mode de réalisation, parallèlement ou perpendiculairement à un axe longitudinal de la roue polaire.

Dans un exemple de mise en oeuvre de l'invention, la roue polaire comporte au moins deux griffes consécutives, et la marque d'indexation est formée entre deux griffes consécutives de la roue polaire.

Par exemple, la marque d'indexation peut être formée à distance angulaire égale des deux griffes. En variante, la marque d'indexation peut être formée plus proche de l'une des griffes.

Si on le souhaite, la marque d'indexation peut être formée sur une face latérale de la roue polaire, la marque d'indexation ayant notamment une forme en creux, étant par exemple une encoche. Cette encoche présente par exemple une section transversale sensiblement en arc de cercle. La marque d'indexation peut par exemple s'étendre entre deux faces planes opposées de la roue polaire.

La roue polaire peut comporter, le cas échéant, deux marques d'indexation angulaire, notamment diamétralement opposées. En variante, les marques d'indexation peuvent être disposées l'une par rapport à l'autre avec une distance angulaire inférieure à 180°.

Il est également possible d'avoir sur une roue polaire une marque d'indexation angulaire entre chaque paire de griffes consécutives, ces marques pouvant alors servir pour un détrompage.

Avantageusement, la marque d'indexation angulaire est réalisée par enlèvement de matière, notamment par usinage.

Dans un exemple de mise en oeuvre de l'invention, le procédé comprend une étape de calibrage de la roue polaire, et la marque d'indexation angulaire est réalisée par usinage pendant ou après le calibrage de la roue polaire. Cette étape de calibrage vise à ajuster les dimensions de la roue polaire, par exemple par pression à froid dans un moule.

La marque d'indexation angulaire peut avantageusement être réalisée avant l'usinage de la rainure définissant partiellement l'espace interpolaire.

Dans un autre exemple de mise en oeuvre de l'invention, lorsque la roue polaire est réalisée par moulage, la marque d'indexation peut être issue du moulage de la roue polaire. Une étape pour enlever une bavure éventuelle au niveau de la marque d'indexation peut être prévue après démoulage de la roue polaire.

De préférence, le rotor comportant une bobine et au moins un aimant interpolaire, le procédé comprend l'étape suivante :
- après assemblage des deux roues polaires, de la bobine et de l'aimant interpolaire, imprégner au moins la bobine et l'aimant interpolaire avec un vernis.

L'invention permet d'imprégner la bobine et les aimants interpolaires en une seule étape, ce qui permet de réduire le coût de production.

Le rotor peut comporter deux éléments de ventilation avant et arrière, pourvus notamment de pales, et le procédé peut comprendre, après l'assemblage des deux roues polaires et la fixation des éléments de ventilation sur les roues polaires, une étape d'imprégnation du rotor avec un vernis.

Les éléments de ventilation peuvent ainsi être protégés de la corrosion grâce au vernis.

L'invention a encore pour objet une roue polaire pour rotor de machine électrique tournante, caractérisée par le fait qu'elle comporte une marque d'indexation angulaire, réalisée notamment par enlèvement de matière.

La marque d'indexation angulaire peut comporter par exemple une encoche formée entre deux griffes consécutives de la roue polaire.

L'encoche est réalisée avantageusement par usinage de la roue polaire.

Dans un exemple de mise en oeuvre de l'invention, la roue comporte au moins une griffe sur laquelle est formée au moins une rainure destinée à former, après assemblage avec une autre roue polaire, un espace interpolaire dans lequel est inséré au moins un aimant.

L'invention a également pour objet un rotor comportant deux roues polaires telles que définies ci-dessus.

L'invention a encore pour objet une machine électrique tournante, notamment un alternateur pour véhicule automobile, comportant un stator et un rotor tel défini ci-dessus.

L'invention a encore pour objet un procédé de fabrication d'un rotor de machine électrique tournante, notamment un alternateur, le rotor comprenant deux roues polaires, le procédé comportant les étapes suivantes :
- réaliser sur chaque roue polaire au moins une marque d'indexation angulaire,
- assembler les roues polaires en les disposant angulairement l'une par rapport à l'autre, en prenant comme référence angulaire les marques d'indexation.

L'invention pourra être mieux comprise à la lecture de la description détaillée qui va suivre, d'exemples de mise en oeuvre non limitatifs de l'invention, et à l'examen du dessin annexé, sur lequel :
- la figure 1 représente, schématiquement et partiellement, en coupe longitudinale, un alternateur conforme à un exemple de mise en oeuvre de l'invention,
- la figure 2 correspond à un schéma-bloc illustrant différentes étapes de fabrication des roues polaires et leur assemblage pour former l'alternateur de la figure 1,
- la figure 3 correspond à un schéma-bloc illustrant différentes étapes de la fabrication du rotor de l'alternateur de la figure 1,
- la figure 4 représente, schématiquement et partiellement, une roue polaire du rotor pour l'alternateur de la figure 1, en vue latérale,
- la figure 5 illustre, schématiquement et partiellement, la roue polaire de la figure 4, en vue de dessous,
- la figure 6 représente, schématiquement et partiellement, en coupe, la roue polaire de la figure 4,
- les figures 7 à 9 représentent, schématiquement et partiellement, différentes étapes de l'assemblage des deux roues polaires de l'alternateur de la figure 1, et
- la figure 10 représente, schématiquement et partiellement, en coupe suivant X-X, un détail du rotor de la machine de la figure 1.

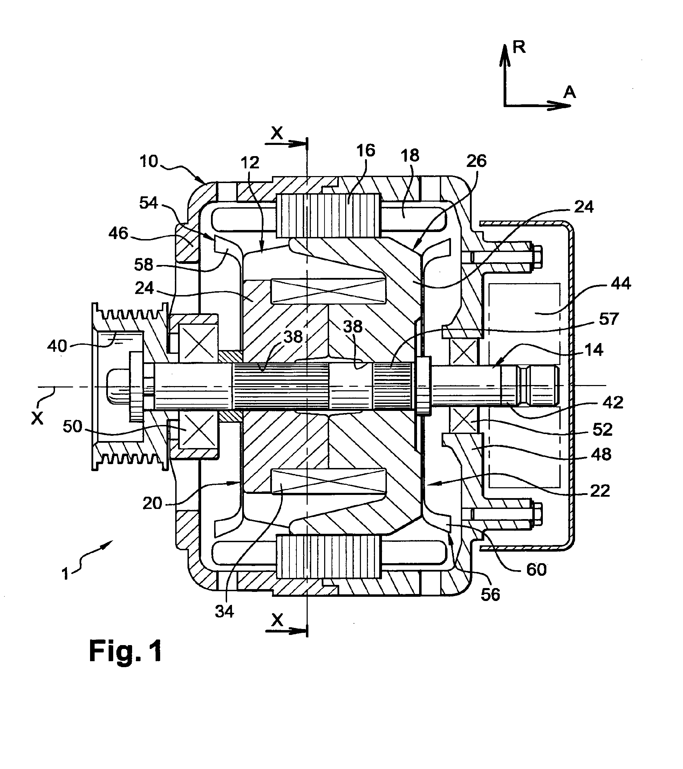

Dans la suite de la description, les flèches "A" et "R" de la figure 1 indiquent respectivement des directions axiale et radiale.

On a représenté sur la figure 1 une machine électrique tournante polyphasée 1 formée, dans le présent exemple de mise en oeuvre de l'invention, par un alternateur pour véhicule automobile. Bien entendu, la machine électrique 1 peut, si on le souhaite, être réversible et former un alterno-démarreur pouvant fonctionner en mode moteur électrique notamment pour démarrer le moteur thermique du véhicule.

Cette machine 1 comporte un carter 10 et, à l'intérieur de celui-ci, un rotor 12 solidaire en rotation d'un arbre central 14 d'axe X, appelé arbre de rotor, et un stator 16 qui entoure le rotor 12 et qui comporte un corps en forme d'un paquet de tôles doté d'encoches pour le montage d'un bobinage de stator 18 formant de part et d'autre du stator 16 à chaque extrémité axiale de celui-ci un chignon.

Le rotor 12 comprend deux roues polaires 20 et 22, pourvues chacune d'un flasque transversal 24 sur la périphérie duquel se raccordent une pluralité de griffes 26 s'étendant sensiblement suivant la direction axiale A.

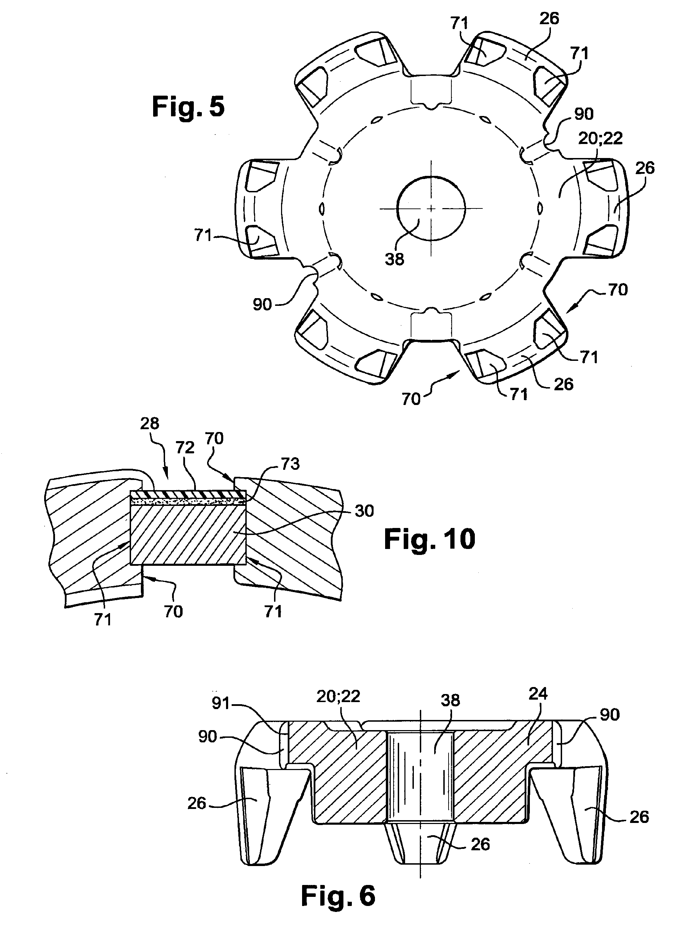

Les griffes 26 présentent globalement une forme trapézoïdale lorsqu'elles sont observées suivant une direction radiale R, comme on peut le voir sur la figure 6 par exemple.

Les griffes 26 d'une roue polaire forment avec les griffes 26 de l'autre roue polaire des espaces interpolaires 28 agencés pour recevoir un ou plusieurs aimants permanents 30, comme expliqué plus loin en liaison avec la figure 10.

Un bobinage d'excitation 34 est mis en place entre les flasques 24 des roues polaires 20 et 22.

Chaque roue polaire 20 ; 22 comporte un alésage formant un passage intérieur 38 pour recevoir l'arbre 14.

Les roues polaires 20 et 22 sont réalisées par exemple en acier.

Lorsque l'arbre 14 est en rotation et le bobinage d'excitation 34 activé par une alimentation électrique, le rotor inducteur 12 crée un courant induit alternatif dans le stator 16.

L'arbre 14 porte à son extrémité avant une poulie 40 appartenant à un dispositif de transmission de mouvement par l'intermédiaire d'au moins une courroie (non représentée) entre l'alternateur 1 et le moteur thermique du véhicule automobile, et à son extrémité arrière 42 des bagues collectrices reliées par des liaisons filaires (non représentées) au bobinage d'excitation 34 du rotor 12.

Des balais d'un porte-balais 44 représenté de manière très schématique sont disposés de façon à frotter sur les bagues collectrices, afin d'alimenter le bobinage 34 en courant électrique.

Le carter 10 comporte, dans l'exemple considéré, deux parties, à savoir un palier avant 46 sensiblement adjacent à la poulie 40 et un palier arrière 48 portant le porte-balais 44.

Les paliers 46 et 48 portent chacun un roulement à billes respectivement 50 et 52 pour le montage à rotation de l'arbre 14.

L'alternateur 1 comporte également des moyens pour son refroidissement.

Par exemple, comme illustré à la figure 1, les paliers 46 et 48 sont ajourés pour permettre le refroidissement de l'alternateur par circulation d'air.

Le rotor 12 porte, dans l'exemple décrit, au moins à l'une de ses extrémités axiales un ventilateur destiné à assurer une circulation de l'air. Un premier élément de ventilation 54 est par exemple prévu sur la face transversale avant du rotor 12 et un deuxième élément de ventilation 56 est prévu sur la face arrière du rotor 12. Chaque élément de ventilation 54 et 56 est pourvu d'une pluralité de pâles 58 et 60.

Dans l'exemple de réalisation décrit, chaque roue polaire 20 ; 22 comporte six griffes 26 de manière à définir un rotor avec 12 espaces interpolaires 28.

En variante, le rotor 12 peut comporter 2, 4, 6, 8 ou 10 espaces interpolaires 28, en fonction du type de machine électrique souhaité.

On va maintenant décrire en référence aux figures 5 et 10 un détail du rotor 12.

Chaque griffe 26 d'une roue polaire 20 ; 22 présente deux faces latérales 70 définissant avec des faces 70 de l'autre roue polaire 20 ; 22 les espaces interpolaires 28.

Chaque face latérale 70 est pourvue d'une rainure 71 de section sensiblement rectangulaire, réalisée dans l'exemple considéré par usinage comme expliqué plus loin.

Les aimants 30 insérés dans les espaces interpolaires 28 sont des aimants permanents, par exemple en terre rare ou en ferrite, avec notamment une section transversale rectangulaire.

Le cas échéant, une lame ou laminette 72 peut être disposée sur la face radialement extérieure de chaque aimant 30 avec interposition d'une couche d'adhésif 73.

Bien entendu, on ne sort pas du cadre de la présente invention lorsque les aimants 30 sont insérés dans les espaces interpolaires 28 sans utilisation de lames 72.

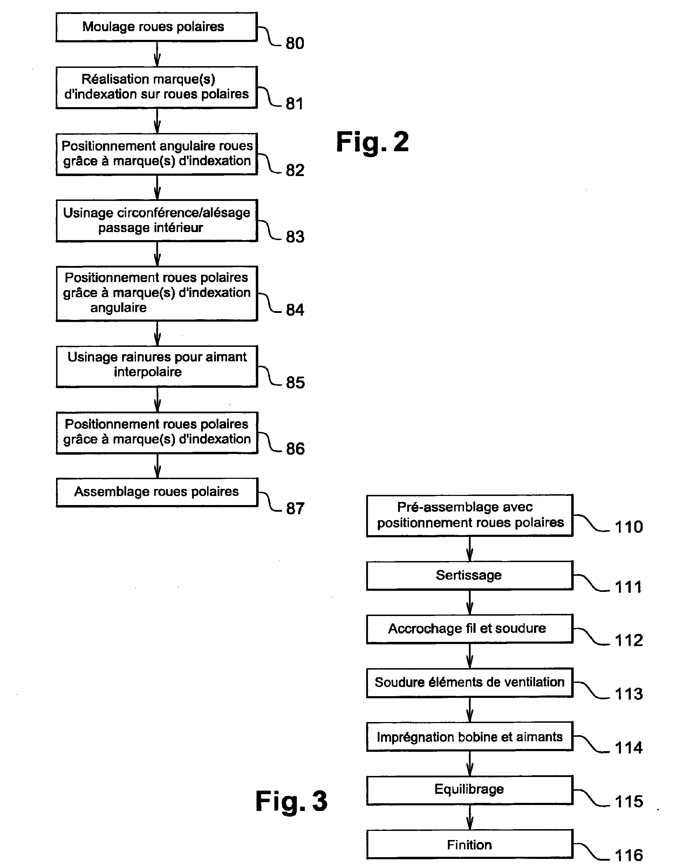

On va décrire ci-après, notamment en référence à la figure 2, différentes étapes de la fabrication des roues polaires 20 et 22 et leur assemblage.

Dans une première étape 80, les roues polaires 20 et 22 sont réalisées par moulage d'un acier.

Chaque roue polaire 20 ; 22 issue du moulage comporte le flasque 24 et les griffes 26.

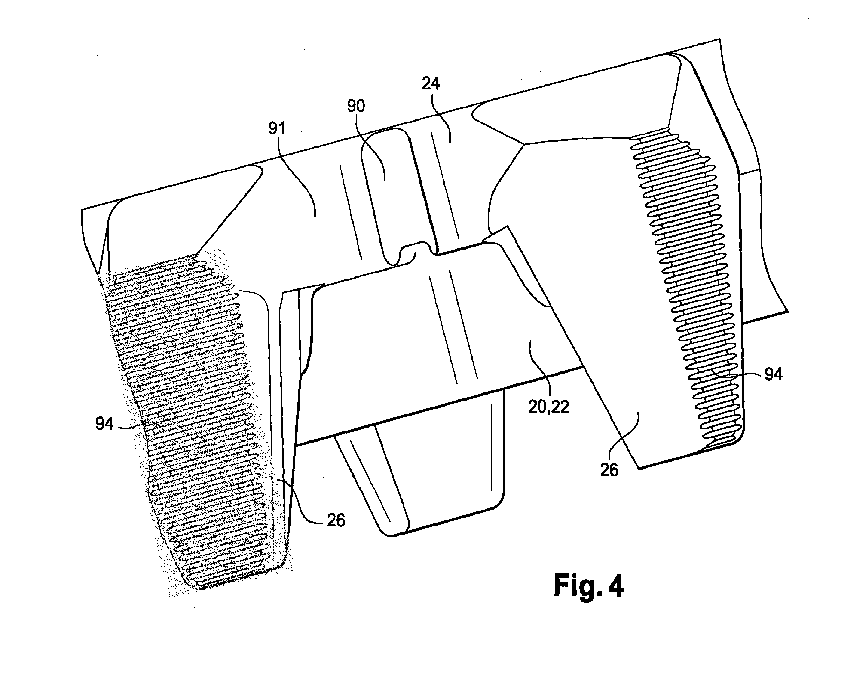

Puis, dans une étape 81, on réalise sur chaque roue polaire 20 ; 22 au moins une marque d'indexation angulaire 90, visible par exemple sur la figure 4, et dont le rôle sera expliqué plus bas.

Cette marque d'indexation 90 est formée, dans l'exemple décrit, pendant une phase de calibrage de la roue polaire, par usinage de la roue polaire 20 ; 22.

En variante, la marque d'indexation 90 peut être formée préalablement lors du moulage de la roue polaire 20 ; 22, puis être rattrapée par une frappe à froid pour supprimer toute bavure au niveau de la marque d'indexation 90.

Dans l'exemple illustré aux figures 4 à 6, la marque d'indexation 90 comporte une encoche formée sur un flanc ou face latérale 91 du flasque 24 de la roue polaire 20 ; 22.

Cette marque 90 est présente entre deux griffes 26 consécutives de la roue polaire 20 ; 22, à distance angulaire égale de ces deux griffes 26.

La marque d'indexation 90 peut présenter une section transversale en arc de cercle, comme illustré sur la figure 5.

L'invention n'est pas limitée à cette forme d'encoche, laquelle peut présenter une section en portion de polygone par exemple.

Bien entendu, dans une variante non illustrée, la marque d'indexation 90 peut être présente en un emplacement différent de la roue polaire 20 ; 22, en étant par exemple plus proche de l'une des griffes 26 que de l'autre.

Comme représenté sur les figures 5 et 6 notamment, chaque roue polaire 20 ; 22 comporte deux marques d'indexation angulaires 90 diamétralement opposées.

En variante, chaque roue polaire 20 ; 22 peut comporter un nombre différent de marque d'indexation 90, par exemple une unique marque d'indexation 90.

Après la formation des marques d'indexation angulaire 90, dans une étape 82 représentée sur la figure 2, la roue polaire 20 ; 22 est disposée sur une machine d'usinage, non représentée, avec une orientation angulaire déterminée en fonction des marques d'indexation 90 qui servent de référence angulaire.

A cet effet, la machine est équipée de tiges de maintien pouvant coopérer avec les marques d'indexation 90 pour maintenir la roue polaire 20 ; 22 dans la position angulaire prédéterminée.

Une fois le maintien angulaire assuré, dans une étape 83, on procède à l'aide d'une fraise de la machine d'usinage à l'usinage d'une face circonférentielle 94 des griffes 26 de la roue polaire 20 ; 22 (voir figure 4) pour la finition du diamètre extérieur de la roue.

La machine d'usinage est également commandée pour former un alésage dans la roue polaire 20 ; 22 pour former le passage intérieur 38.

Puis, dans une étape 84, la pièce polaire 20 ; 22 est transportée sur une autre machine d'usinage sur laquelle la roue polaire est mise en place dans une position angulaire souhaitée notamment en faisant coopérer une tige de maintien de la machine avec une seule des marques d'indexation, en liaison avec l'introduction d'un mandrin expansible dans le passage intérieur 38 de la roue polaire.

Comme on peut le constater, dans cette étape 84, une seule des deux marques d'indexation 90 est utilisée pour le maintien de la roue polaire. En variante, il est possible d'utiliser les deux marques pour assurer le maintien de la roue polaire.

Une fois la roue polaire 20 ; 22 ainsi maintenue, on procède à l'usinage, à l'aide d'une fraise (non représentée) de la machine, des rainures 71.

Ainsi, l'usinage étant réalisé avant l'assemblage des roues polaires, le type de fraise utilisée pour usiner les rainures 71 peut être choisi de manière à pouvoir former une rainure 71, et donc un espace interpolaire 28, de taille réduite, permettant ainsi de pouvoir insérer dans les espaces interpolaires des aimants 30 de petite taille.

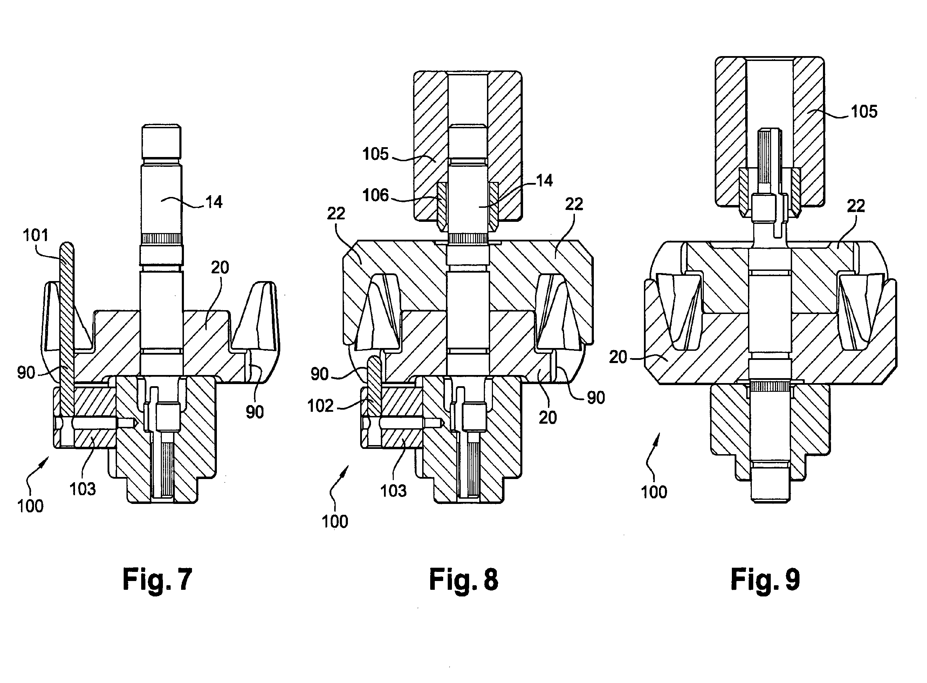

Ensuite, dans les étapes 86 et 87, deux roues polaires 20 et 22 sont disposées sur un socle 103 d'une machine d'assemblage 100 représentée sur les figures 7 à 9.

Le positionnement angulaire précis des roues polaires 20 et 22 est assuré par la coopération de tiges de maintien 101 (voir figure 7) et 102 (voir figure 8) de la machine 100 avec les marques d'indexation angulaire 90 des roues 20 ; 22.

Dans l'étape illustré à la figure 7, la roue polaire 20 est introduite sur l'arbre 14 via le passage intérieur 38, tout en étant maintenue angulairement par coopération de la tige 90 avec la marque d'indexation 90.

Dans l'étape de la figure 8, la tige 101 est escamotée et l'autre tige 102 plus courte vient s'engager sur la marque d'indexation 90 de manière à libérer l'espace nécessaire pour monter l'autre roue polaire 22, après mise en place de la bobine 34.

La roue polaire 22 est maintenue dans une position angulaire prédéterminée grâce à une ou plusieurs tiges de maintien (non représentée) de la machine 100.

Une fois les roues 20 et 22 plaquées l'une contre l'autre, un outil 105 avec une lame 106 est amené contre la roue 22 de manière à sertir la roue 22 sur l'arbre 14.

On va maintenant décrire, en référence à la figure 3, différentes étapes de fabrication du rotor 12 à partir des roues polaires 20 et 22 :
- pré-assemblage (étape 110) des roues polaires 20 et 22 avec l'arbre 14, la bobine 34, les aimants 30 et les laminettes 72, comme décrit ci-dessus,
- sertissage du pré-assemblage pour condamner les différents éléments (étape 111) en repoussant de la matière des roues polaires sur une zone prédéterminée de l'arbre,
- accrochage des fils de la bobine et soudure (étape 112),
- soudure des éléments de ventilation 54 et 56 (étape 113),
- imprégnation de la bobine 34, des éléments de ventilation et des aimants 30 avec un vernis (étape 114),
- équilibrage du rotor 12 ainsi obtenu (étape 115), par exemple en formant un ou plusieurs trous sur la roue polaire,
- opérations de finition (étape 116), par exemple usinage de pistes conductrices du collecteur.

Bien entendu, l'invention n'est pas limitée à l'exemple de mise en oeuvre qui vient d'être décrit.

## Revendications

1. Procédé de fabrication d'un rotor (12) de machine électrique tournante (1), notamment un alternateur, le rotor comprenant deux roues polaires (20 ; 22) définissant entre elles au moins un espace interpolaire (28) agencé pour recevoir au moins un aimant (30), le procédé comportant, avant l'assemblage des deux roues polaires, les étapes suivantes :
- réaliser sur l'une au moins des roues polaires au moins une marque d'indexation angulaire (90),
- former par usinage, sur la roue polaire, au moins une rainure (71) délimitant partiellement l'espace interpolaire, en maintenant la roue polaire dans une position angulaire dépendante de la marque d'indexation angulaire (90).

2. Procédé selon la revendication précédente, **caractérisé par le fait qu'**il comporte l'étape consistant, avant l'assemblage des deux roues polaires, à usiner une face circonférentielle (94) de l'une au moins des roues polaires en maintenant la roue polaire dans une position angulaire dépendante de la marque d'indexation angulaire (90).

3. Procédé selon l'une des revendications précédentes, **caractérisé par le fait qu'**il comporte l'étape suivante :
- réaliser un alésage sur la roue polaire de manière à former un passage intérieur (38) pour recevoir un arbre (14) de la machine tournante, en maintenant la roue polaire dans une position angulaire dépendante de la marque d'indexation (90).

4. Procédé selon l'une quelconque des revendications précédentes, **caractérisé par le fait qu'**il comporte l'étape suivante :
- assembler les roues polaires (20 ; 22) en les positionnant angulairement l'une par rapport à l'autre à l'aide de marques d'indexation réalisées sur les roues polaires (90).

5. Procédé selon l'une quelconque des revendications précédentes, **caractérisé par le fait que** le maintien de la roue polaire dans la position angulaire prédéterminée est réalisé à l'aide d'au moins une tige de maintien (101 ; 102) coopérant avec l'une au moins des marques d'indexation (90) de la roue polaire.

6. Procédé selon l'une quelconque des revendications précédentes, la roue polaire comportant au moins deux griffes consécutives, **caractérisé par le fait que** la marque d'indexation (90) est formée entre deux griffes (26) consécutives de la roue polaire.

7. Procédé selon l'une quelconque des revendications précédentes, **caractérisé par le fait que** la marque d'indexation (90) est formée sur une face latérale (91) de la roue polaire, la marque d'indexation ayant notamment la forme d'une encoche.

8. Procédé selon l'une quelconque des revendications précédentes, **caractérisé par le fait que** la roue polaire comporte deux marques d'indexation angulaire (90), notamment diamétralement opposées.

9. Procédé selon l'une quelconque des revendications précédentes, **caractérisé par le fait que** la marque d'indexation est formée par enlèvement de matière, notamment par usinage.

10. Roue polaire (20 ; 22) pour rotor de machine électrique tournante, **caractérisée par le fait qu'**elle comporte une marque d'indexation angulaire (90), notamment réalisée par enlèvement de matière.

11. Roue selon la revendication précédente, **caractérisée par le fait que** la marque d'indexation angulaire (90) comporte une encoche formée entre deux griffes consécutives de la roue polaire.

12. Roue selon la revendication précédente, **caractérisée par le fait que** l'encoche est réalisée par usinage de la roue polaire.

13. Roue selon l'une quelconque des revendications 10 à 12, **caractérisée par le fait qu'**elle comporte au moins une griffe (26) sur laquelle est formée au moins une rainure (71) destinée à former, après assemblage avec une autre roue polaire, un espace interpolaire dans lequel est inséré au moins un aimant.

14. Rotor (12) pour machine électrique tournante comportant deux roues polaires telles que définies dans l'une quelconque des revendications 10 à 13.

15. Machine électrique tournante (1), notamment un alternateur pour véhicule automobile, comportant un stator et un rotor tel défini dans la revendication 14.

## Patentansprüche

1. Verfahren zur Herstellung eines Rotors (12) einer rotierenden elektrischen Maschine (1), insbesondere einen Wechselstromgenerator, wobei der Rotor zwei Polräder (20; 22) aufweist, die zwischen sich mindestens eine Pollücke (28) definieren, die angeordnet ist, um mindestens einen Magneten (30) aufzunehmen, wobei das Verfahren vor dem Zusammenbau der beiden Polräder folgende Schritte umfasst:
- Ausführen mindestens einer Winkelindexierungsmarke (90) auf mindestens einem der Polräder,
- Ausbilden durch Bearbeitung mindestens einer Rille (71) auf dem Polrad, welche teilweise die Pollücke begrenzt, indem das Polrad in einer Winkelposition gehalten wird, die von der Winkelindexierungsmarke (90) abhängig ist.

2. Verfahren nach dem vorhergehenden Anspruch, **dadurch gekennzeichnet, dass** es den Schritt umfasst, der darin besteht, vor dem Zusammenbau der beiden Polräder eine Umfangsfläche (94) mindestens eines der Polräder herzustellen, indem das Polrad in einer Winkelposition gehalten wird, die von der Winkelindexierungsmarke (90) abhängig ist.

3. Verfahren nach einem der vorhergehenden Ansprüche, **dadurch gekennzeichnet, dass** es folgenden Schritt umfasst:
- Herstellen einer Bohrung auf dem Polrad, um einen inneren Durchgang (38) auszubilden, um eine Welle (14) der rotierenden Maschine aufzunehmen, indem das Polrad in einer Winkelposition gehalten wird, die von der Indexierungsmarke (90) abhängig ist.

4. Verfahren nach einem der vorhergehenden Ansprüche, **dadurch gekennzeichnet, dass** es folgenden Schritt umfasst:
- Zusammenbauen der Polräder (20; 22), indem sie winklig zueinander mit Hilfe von Indexierungsmarken, die auf den Polrädern (90) ausgeführt sind, angeordnet werden.

5. Verfahren nach einem der vorhergehenden Ansprüche, **dadurch gekennzeichnet, dass** die Haltung des Polrads in der vorgegebenen Winkelposition mit Hilfe mindestens einer Haltestange (101; 102) erfolgt, welche mit mindestens einer der Indexierungsmarken (90) des Polrads zusammenwirkt.

6. Verfahren nach einem der vorhergehenden Ansprüche, wobei das Polrad mindestens zwei aufeinanderfolgende Greifer aufweist, **dadurch gekennzeichnet, dass** die Indexierungsmarke (90) zwischen zwei aufeinanderfolgenden Greifern (26) des Polrads ausgebildet ist.

7. Verfahren nach einem der vorhergehenden Ansprüche, **dadurch gekennzeichnet, dass** die Indexierungsmarke (90) auf einer Seitenfläche (91) des Polrads ausgebildet ist, wobei die Indexierungsmarke insbesondere die Form einer Aussparung aufweist.

8. Verfahren nach einem der vorhergehenden Ansprüche, **dadurch gekennzeichnet, dass** das Polrad zwei Winkelindexierungsmarken (90) aufweist, die insbesondere diametral gegenüberliegend angeordnet sind.

9. Verfahren nach einem der vorhergehenden Ansprüche, **dadurch gekennzeichnet, dass** die Indexierungsmarke durch Entfernung von Material, insbesondere durch Bearbeitung, gebildet ist.

10. Polrad (20; 22) für den Rotor einer rotierenden elektrischen Maschine, **dadurch gekennzeichnet, dass** es eine Winkelindexierungsmarke (90) aufweist, die insbesondere durch Entfernung von Material ausgeführt ist.

11. Rad nach dem vorhergehenden Anspruch, **dadurch gekennzeichnet, dass** die Winkelindexierungsmarke (90) eine Aussparung aufweist, die zwischen zwei aufeinanderfolgenden Greifern des Polrads ausgebildet ist.

12. Rad nach dem vorhergehenden Anspruch, **dadurch gekennzeichnet, dass** die Aussparung durch Bearbeitung des Polrads ausgeführt ist.

13. Rad nach einem der Ansprüche 10 bis 12, **dadurch gekennzeichnet, dass** es mindestens einen Greifer (26) aufweist, auf dem mindestens eine Rille (71) ausgebildet ist, die dazu dient, nach dem Zusammenbau mit einem anderen Polrad eine Pollücke zu bilden, in der mindestens ein Magnet eingefügt ist.

14. Rotor (12) für eine rotierende elektrische Maschine, aufweisend zwei Polräder, wie in einem der Ansprüche 10 bis 13 festgelegt.

15. Rotierende elektrische Maschine (1), insbesondere ein Wechselstromgenerator für Kraftfahrzeuge, umfassend einen Stator und einen Rotor, wie in Anspruch 14 festgelegt.

## Claims

1. Method for manufacturing a rotor (12) of a rotating electrical machine (1), notably an alternator, the rotor comprising two rotary fields (20; 22) defining, between them, at least one inter-polar space (28) arranged to receive at least one magnet (30), the method comprising, before the assembly of the two rotary fields, the following steps:
- producing, on at least one of the rotary fields, at least one angular indexing mark (90),
- forming, by machining, on the rotary field, at least one groove (71) partially delimiting the interpolar space, by keeping the rotary field in an angular position dependent on the angular indexing mark (90).

2. Method according to the preceding claim, **characterized in that** it comprises the step consisting, before the assembly of the two rotary fields, in machining a circumferential face (94) of at least one of the rotary fields by keeping the rotary field in an angular position dependent on the angular indexing mark (90).

3. Method according to one of the preceding claims, **characterized in that** it comprises the following step:
- producing a bore on the rotary field so as to form an internal passage (38) to receive a shaft (14) of the rotating machine, by keeping the rotary field in an angular position dependent on the indexing mark (90).

4. Method according to any one of the preceding claims, **characterized in that** it comprises the following step:
- assembling the rotary fields (20; 22) by positioning them angularly relative to one another using indexing marks produced on the rotary fields (90).

5. Method according to any one of the preceding claims, **characterized in that** the rotary field is kept in the predetermined angular position using at least one holding rod (101; 102) cooperating with at least one of the indexing marks (90) of the rotary field.

6. Method according to any one of the preceding claims, the rotary field comprising at least two consecutive claws, **characterized in that** the indexing mark (90) is formed between two consecutive claws (26) of the rotary field.

7. Method according to any one of the preceding claims, **characterized in that** the indexing mark (90) is formed on a lateral face (91) of the rotary field, the indexing mark being notably in the form of a notch.

8. Method according to any one of the preceding claims, **characterized in that** the rotary field comprises two angular indexing marks (90), notably diametrically opposed.

9. Method according to any one of the preceding claims, **characterized in that** the indexing mark is formed by substance removal, notably by machining.

10. Rotary field (20; 22) for rotor of a rotating electrical machine, **characterized in that** it comprises an angular indexing mark (90), notably produced by substance removal.

11. Rotary field according to the preceding claim, **characterized in that** the angular indexing mark (90) comprises a notch formed between two consecutive claws of the rotary field.

12. Rotary field according to the preceding claim, **characterized in that** the notch is produced by machining the rotary field.

13. Rotary field according to any one of Claims 10 to 12, **characterized in that** it comprises at least one claw (26) on which is formed at least one groove (71) intended to form, after assembly with another rotary field, an interpolar space in which at least one magnet is inserted.

14. Rotor (12) for rotating electrical machine comprising two rotary fields as defined in any one of Claims 10 to 13.

15. Rotating electrical machine (1), notably an alternator for a motor vehicle, comprising a stator and a rotor as defined in Claim 14.
